# EUROPÄISCHE PATENTSCHRIFT

(11) **EP 1 673 609 B1**
(45) Veröffentlichungstag und Bekanntmachung des Hinweises auf die Patenterteilung: **24.09.2014**
(21) Anmeldenummer: 04741139.2
(22) Anmeldetag: 19.07.2004
(51) Int. Cl.: B25J 21/02, G01N 1/42

(54) **VORRICHTUNG UND VERFAHREN ZUR HANDHABUNG EINER KRYOPROBE**
DEVICE AND METHOD FOR HANDLING A PROBE
DISPOSITIF ET PROCEDE DE MANIPULATION D'UN ECHANTILLON

(30) Priorität: 18.07.2003 DE 10332799
(43) Veröffentlichungstag der Anmeldung: 28.06.2006
(73) Patentinhaber: Fraunhofer-Gesellschaft zur Förderung der angewandten Forschung e.V., 80686 München (DE)
(72) Erfinder: FUHR, Günter, R., 13187 Berlin (DE); SCHÖN, Uwe, 66540 Neunkirchen (DE); ZIMMERMANN, Heiko c/o IBMT, Ensheimer Strasse 48 66386 St. Ingbert (DE); OH, Young-Joo, IBMT Fraunhofer Institut, 66280 Sulzbach (DE)
(74) Vertreter: Beier, Ralph
(86) Internationale Anmeldenummer: PCT/EP2004/008051
(87) Internationale Veröffentlichungsnummer: WO 2005/010499

(56) Entgegenhaltungen:
- EP-A- 0 978 682
- WO-A-02/16844
- DE-A1- 4 012 600
- DE-A1- 4 030 186
- FR-A- 772 020
- GB-A- 2 276 088
- GB-A- 2 306 376
- US-A- 3 267 830
- US-A- 4 284 894
- US-A- 4 566 293
- US-A- 4 612 916
- US-A- 4 680 945
- US-A- 5 048 300
- US-A- 5 262 578
- US-A- 5 352 898
- US-A- 5 644 922
- US-A1- 2003 127 951

## Beschreibung

Die Erfindung betrifft eine Vorrichtung und ein Verfahren zur Handhabung einer Probe, insbesondere zur Bearbeitung, Untersuchung oder Ein- oder Auslagerung einer Kryoprobe gemäß den Oberbegriffen der Ansprüche 1 bzw. 12.

Es ist im Bereich der Biologie, der Pharmakologie, der Medizin und der Biotechnologie bekannt, Proben von biologischem Material unter Aufrechterhaltung der Vitalität des Probenmaterials bei Temperaturen flüssigen Stickstoffs einzufrieren. Derartige Proben werden auch als Kryoproben bezeichnet und werden üblicherweise in Probenbehältern gelagert und transportiert, wobei die Probenbehälter zum Einfrieren der Proben in sogenannte Kryotanks eingebracht werden, in denen sich flüssiger Stickstoff befindet. Bei der Einlagerung der Probenbehälter in die Kryotanks und bei der späteren Entnahme der Probenbehälter aus den Kryotanks treten jedoch verschiedene Probleme auf, die im folgenden kurz beschrieben werden.

Zum einen müssen die Kryotanks zur Ein- bzw. Auslagerung der Probenbehälter mit den darin befindlichen Kryoproben geöffnet werden, wobei Feuchtigkeit aus der den Kryotank umgebenden Luft in den Kryotank einfallen kann, was in dem Kryotank zu einer Eisbildung führt.

Zum anderen gelangen die aus dem Kryotank entnommenen Probenbehälter bei ihrer Entnahme aus dem Kryotank in Kontakt mit der den Kryotank umgebenden, relativ warmen und feuchten Luft, was zu Kondensationen und nachfolgend Eisbildungen an den entnommenen Probenbehältern führt. Diese Eisbildung ist unerwünscht, da sie die Identifizierung der Probenbehälter und die Automatisierung der Handhabungsprozesse erschwert und ein Abtauen, Abreiben oder anderweitiges Entfernen des auf dem Probenbehälter gebildeten Reifes oder der Eisbedeckung erfordert. Darüber hinaus kann die Eisbildung an den Probenbehältern auch elektrische Kontakte an den Probenbehältern unzugänglich machen und bewegliche mechanische Vorrichtungen an den Probenbehältern vereisen.

Darüber hinaus kann der Kontakt der Kryoproben mit der keimhaltigen Umgebungsluft zu einer Verkeimung führen, was ebenfalls unerwünscht ist.

Die vorstehend beschriebenen Probleme treten jedoch nicht nur bei der Ein- und Auslagerung von Probenbehältern in Kryotanks auf, sondern auch bei einer anderweitigen Handhabung oder Bearbeitung von Probenbehältern mit Kryoproben, wenn diese in Kontakt mit der umgebenden Luft gelangen.

Aus US-A-4 680 945 ist eine Vorrichtung beziehungsweise ein Verfahren gemäß dem Oberbegriff der unabhängigen Ansprüche bekannt. Hierbei können jedoch aus dem verflüssigten Schutzgas auch Bakterien, Viren und andere Partikel ausgasen. Ferner ist zum Stand der Technik hinzuweisen auf FR 772 020 A und US-A-3 267 830.

Der Erfindung liegt deshalb die Aufgabe zu Grunde, bei einer gattungsgemäßen Vorrichtung beziehungsweise einen gattungsgemäßen Verfahren zu verhindern, dass aus dem verflüssigten Schutzgas Bakterien, Viren und andere Partikel ausgasen.

Diese Aufgabe wird durch eine Vorrichtung gemäß Anspruch 1 und ein Verfahren gemäß Anspruch 12 gelöst.

Die Erfindung umfasst die allgemeine technische Lehre, bei der Handhabung von Proben bzw. Probenbehältern einen Kontakt mit der umgebenden relativ feuchten, meist keimhaltigen Luft zu verhindern, damit keine Eisbildung an den Proben bzw. Probenbehältern auftreten kann und die Proben nicht verkeimen.

Im Rahmen dieses allgemeinen erfinderischen Gedankens kann die Eisbildung an den Probenbehältern bzw. Proben und deren Verkeimung auf verschiedene Arten verhindert werden, wie im folgenden ausgeführt wird.

Eine Möglichkeit hierzu besteht darin, die Proben bzw. Probenbehälter bei der Handhabung mit einem Schutzgas zu umgeben, um einen direkten Kontakt mit der relativ feuchten Umgebungsluft zu verhindern. Bei dem Schutzgas handelt es sich vorzugsweise um gasförmigen Stickstoff, der ohnehin zur Kühlung der Kryoproben verwendet wird und deshalb ohne größeren zusätzlichen Aufwand auch als Schutzgas für die Proben bzw. Probenbehälter eingesetzt werden kann. Die Erfindung ist jedoch hinsichtlich des zu verwendenden Schutzgases nicht auf Stickstoff beschränkt, sondern grundsätzlich auch mit anderen Schutzgasen realisierbar, die eine Eisbildung an den Proben bzw. Probenbehältern verhindern.

Eine andere Möglichkeit zur Verhinderung einer Eisbildung an den Proben bzw. Probenbehältern besteht darin, das die Proben bzw. Probenbehälter umgebende Umgebungsgas zu kühlen, um das Temperaturgefälle zwischen dem Umgebungsgas und der Oberfläche der Proben bzw. Probenbehälter zu verringern und dadurch Kondensationen an den Proben bzw. Probenbehältern entgegenzuwirken.

Weiterhin besteht die Möglichkeit, das die Proben- bzw. Probenbehälter umgebende Umgebungsgas zu trocknen, um eine Eisbildung an den Proben bzw. Probenbehältern zu verhindern.

Die vorstehend beschriebenen Techniken zur Verhinderung einer Eisbildung schließen sich jedoch nicht gegenseitig aus, sondern können auch in beliebiger Kombination miteinander eingesetzt werden.

Das Schutzgas kann also im Rahmen der Erfindung verschiedene Funktionen erfüllen, nämlich die Kühlung, die Trocknung und den Schutz gegenüber einer Verkeimung.

Zur Trocknung, Kühlung und/oder zum Austausch des die Probe bzw. den Probenbehälter umgebenden Umgebungsgases weist die erfindungsgemäße Vorrichtung eine Klimatisierungseinrichtung auf, wobei der im Rahmen der Erfindung verwendete Begriff einer Klimatisierungseinrichtung allgemein zu verstehen ist. Beispielsweise kann die Funktion der Klimatisierungseinrichtung auch durch flüssigen Stickstoff erfüllt werden, der in einem zur Lagerung der Proben dienenden Kryotank enthalten ist und das Umgebungsgas der Probe bzw. des Probenbehälters mindestens teilweise ersetzt und die Probe bzw. den Probenbehälter dadurch schützt. In diesem Fall besteht die Klimatisierungseinrichtung aus den Bauteilen, die eine Ausgasung des flüssigen Stickstoffs aus dem Kryotank in die Umgebung der Probe bzw. des Probenbehälters ermöglichen.

Gemäß der Erfindung ist ein Schutzbehälter vorgesehen, der die Probe bzw. den Proben-behälter während der Handhabung aufnimmt, wobei die Klimatisierungseinrichtung mit dem Schutzbehälter verbunden ist, um das in dem Schutzbehälter befindliche Umgebungsgas zu trocknen, zu kühlen und/oder durch das Schutzgas zu ersetzen. In dem Schutzbehälter wird hierbei also vorzugsweise eine künstliche Atmosphäre geschaffen, die eine Eisbildung an der Probe bzw. dem Probenbehälter verhindert.

Der Schutzbehälter kann beispielsweise als Schutzglocke oder Schutzhaube ausgebildet sein, wobei die Schutzhaube bzw. Schutzglocke vorzugsweise an ihrer Unterseite eine Öffnung aufweist, um die Probe bzw. den Probenbehälter einzuführen oder zu entnehmen. Eine derartige Schutzhaube bzw. Schutzglocke kann auf die Probe bzw. den Probenbehälter aufgesetzt werden, um diese bei einer nachfolgenden Handhabung zu schützen. Es ist jedoch auch möglich, dass die Schutzhaube bzw. Schutzglocke auf einen Kryotank aufgesetzt wird, so dass die Entnahmeöffnung des Kryotanks innerhalb der Schutzhaube bzw. Schutzglocke liegt und dadurch ebenfalls geschützt ist.

In einer Variante der Erfindung ist die Schutzhaube bzw. Schutzglocke begehbar, so dass eine Bedienungsperson innerhalb der Schutzhaube bzw. Schutzglocke die Handhabung der Probe bzw. des Probenbehälters vornehmen kann.

Bei einem derartigen begehbaren Schutzbehälter ist es vorteilhaft, wenn die erfindungsgemäße Vorrichtung eine Atemluftversorgung für die in dem Schutzbehälter befindliche Bedienungsperson aufweist, wobei diese Atemluftversorgung im einfachsten Fall aus einem Atemluftschlauch bestehen kann, der die Bedienungsperson mit der Außenseite des Schutzbehälters verbindet.

In einer anderen Variante der Erfindung ist der Schutzbehälter dagegen tragbar, so dass auch beim Transport einer Probe bzw. eines Probenbehälters eine Eisbildung verhindert werden kann.

Gemäß der Erfindung weist die vorstehend erwähnte Klimatisierungseinrichtung für den Schutzbehälter eine Schutzgasquelle auf, um den Schutzbehälter mindestens teilweise mit dem Schutzgas zu füllen, wobei das Schutzgas eine Beeinträchtigung der Probe während ihrer Handhabung verhindert. Eine derartige Schutzgasquelle kann beispielsweise ein mindestens teilweise offenes Schutzgasvorratsgefäß aufweisen, in dem sich das Schutzgas in verflüssigter Form befindet, wobei das verflüssigte Schutzgas in den Schutzbehälter ausgast. Beispielsweise kann sich in dem Schutzgasvorratsgefäß flüssiger Stickstoff befinden, der aufgrund der Umgebungswärme in den Schutzbehälter ausgast.

Weiterhin kann ein Heizelement vorgesehen sein, welches das in dem Schutzgasvorratsgefäß befindliche verflüssigte Schutzgas erwärmt und dadurch die Ausgasung fördert und beschleunigt. Ein derartiges Heizelement kann beispielsweise aus einer Stromheizung bestehen, jedoch sind auch andere Bauweisen des Heizelementes möglich.

Darüber hinaus weist das Schutzgasvorratsgefäß ein Filterelement auf, um beim Ausgasen des Schutzgases Bakterien, Viren und andere Partikel zurückzuhalten, die sich in dem verflüssigten Schutzgas befinden.

Weiterhin ist es vorteilhaft, wenn der Schutzbehälter eine mindestens teilweise durchsichtige Behälterwandung aufweist, um während der Handhabung der Probe eine Sichtkontrolle zu ermöglichen. Dies kann beispielsweise dadurch erreicht werden, dass die Behälterwandung vollständig aus Glas oder einem durchsichtigen Kunststoff besteht, jedoch ist es auch möglich, dass in der ansonsten undurchsichtigen Behälterwandung lediglich einzelne Sichtfenster angebracht sind.

Ferner ist an der Oberseite des Schutzbehälters vorzugsweise eine Austrittsöffnung angeordnet, über die überschüssiges Schutzgas abgeleitet werden kann.

Hierbei ist es sinnvoll, wenn an die Austrittsöffnung an der Außenseite des Schutzbehälters ein Abführrohr angeschlossen ist, das eine außerhalb des Schutzbehälters befindliche und nach unten gerichtete Mündungsöffnung aufweist. Diese Ausrichtung der Mündungsöffnung des Abführrohrs verhindert vorteilhaft, dass von außen Luft in den Schutzbehälter einfallen kann.

In einem bevorzugten Ausführungsbeispiel der Erfindung weist der Schutzbehälter ferner einen gasdichten oder gasaustauschreduzierten Eingriff auf, damit die in dem Schutzbehälter befindliche Probe bzw. der Probenbehälter von außen durch eine Bedienungsperson gehandhabt werden kann.

Darüber hinaus kann die erfindungsgemäße Vorrichtung eine gasdichte oder gasaustauschreduzierte Schleuse aufweisen, um die Probe bzw. den Probenbehälter oder sonstige Teile in den Schutzbehälter einführen bzw. daraus entnehmen zu können.

In einer Variante der Erfindung besteht diese Schleuse aus mindestens einer Öffnung in dem Schutzbehälter und einem die Öffnung abdeckenden flexiblen Vorhang.

Eine derartige Gestaltung der Schleuse bietet zum einen den Vorteil, dass zum Öffnen und Schließen der Schleuse kein separater Bedienungsschritt erforderlich ist.

Zum anderen ermöglicht diese Gestaltung der Schleuse eine quasi kontinuierliche Einführung und Entnahme von Teilen, was beispielsweise bei einem automatischen Betrieb an einer Bandstraße wichtig ist, wobei Kryoproben von Arbeitsplatz zu Arbeitsplatz verschoben werden.

Das in dem Schutzbehälter befindliche kalte Schutzgas führt in der Regel zu einer entsprechenden Abkühlung der Behälterwandung, was zu kältebedingten Kondensationen an deren Außenseite führen kann.

In einer Variante der Erfindung weist der Schutzbehälter deshalb eine beheizbare Behälterwandung auf, um derartige kältebedingte Kondensationen an der Außenseite der Behälterwandung zu verhindern. Die Beheizung der Behälterwandung kann beispielsweise durch Anblasen erfolgen, jedoch sind auch andere Heizverfahren zur Erwärmung der Behälterwandung einsetzbar.

In einer anderen Variante der Erfindung ist die Behälterwandung dagegen wärmeisoliert, um die kältebedingte Kondensation an der Außenseite der Behälterwandung zu verringern. Beispielsweise kann die Behälterwandung hierzu aus Plexiglas gefertigt sein, wobei die Wandungsstärke vorzugsweise im Bereich von 8 bis 15mm liegt, um eine ausreichende Isolierungswirkung zu erreichen.

Ferner kann in dem Schutzbehälter eine UV-Lampe angeordnet sein, um den Innenraum des Schutzbehälters zu sterilisieren.

Zusätzlich besteht auch die Möglichkeit, in dem Schutzbehälter eine Kamera anzuordnen, um die Probe bzw. den Probenbehälter zu überwachen.

Weiterhin ist noch zu erwähnen, dass der eingangs beschriebene allgemeine technische Gedanke auch ohne einen Schutzbehälter realisierbar ist. Beispielsweise kann die Probe bzw. der Probenbehälter mit einem Schutzgas angeblasen werden, um die in der Umgebung der Probe bzw. des Probenbehälters ansonsten befindliche relativ feuchte Umgebungsluft zu verdrängen. Darüber hinaus kann die Probe bzw. der Probenbehälter auch von einem Schutzgasvorhang umgeben sein, der durch geeignete Blasdüsen erzeugt wird.

Im folgenden wird eine weitere Variante einer erfindungsgemäßen Kühleinrichtung zunächst allgemein beschrieben.

Diese erfindungsgemäße Kühleinrichtung weist zur Aufnahme von Kühlgut einen Kühlraum auf, der von einer Innenwandung und einer Außenwandung begrenzt wird, wobei sich zwischen der Innenwandung und der Außenwandung ein Zwischenraum befindet, in den eine Kühlmittelzuleitung mündet. Das Kühlmittel (z.B. flüssiger Stickstoff) wird hierbei also nicht direkt in den Kühlraum eingeleitet, sondern in den Zwischenraum zwischen der Innenwandung und der Außenwandung des Kühlraums, wobei die Innenwandung für das Kühlmittel durchlässig ist, so dass das Kühlmittel aus dem Zwischenraum zwischen der Außenwandung und der Innenwandung durch die Innenwandung hindurch in den Kühlraum eintritt.

Vorzugsweise ist in dem Zwischenraum zwischen der Innenwandung und der Außenwandung des Kühlraums ein Puffermaterial angeordnet, welches das in den Zwischenraum eingeleitete Kühlmittel vorübergehend aufnimmt und kontinuierlich durch die Innenwandung hindurch in den Kühlraum abgibt.

Das Puffermaterial ist deshalb vorzugsweise porös, um beispielsweise flüssigen Stickstoff zwischenspeichern zu können.

Die Außenwandung des Kühlraums ist im Gegensatz zu der Innenwandung des Kühlraums vorzugsweise für das Kühlmittel undurchlässig, um ein Austreten des Kühlmittels nach außen in die Umgebung zu verhindern. Darüber hinaus ist die Außenwandung vorzugsweise thermisch isolierend, um eine Abkühlung der Umgebung bzw. eine Erwärmung der Kühleinrichtung zu vermeiden.

Die Innenwandung des Kühlraums besteht dagegen vorzugsweise aus einem thermisch leitfähigen Material, wie beispielsweise Metall, um den Wärmeübergang von dem innenliegenden Kühlraum auf das in dem Zwischenraum befindliche Kühlmittel zu verbessern. Darüber hinaus ist es vorteilhaft, wenn das Material der Innenwandung nicht nur eine gute thermische Leitfähigkeit aufweist, sondern auch eine hohe spezifische Wärmekapazität hat, so dass die Innenwandung mit ihrer Wärmekapazität als thermischer Puffer unerwünschten Temperaturschwankungen entgegenwirkt.

In einem bevorzugten Ausführungsbeispiel der Erfindung ist die Innenwandung im Wesentlichen gitterförmig, so dass das in dem Zwischenraum befindliche Kühlmittel weitgehend ungehindert in den Kühlraum ausgasen kann.

Weiterhin ist der Kühlraum in einem bevorzugten Ausführungsbeispiel der Erfindung wannenförmig und weist an seiner Oberseite einen umlaufenden Rand auf, wobei die Kühlmittelzuleitung vorzugsweise einen Kühlmittelverteiler aufweist, der sich entlang dem umlaufenden Rand des Kühlraums erstreckt und das Kühlmittel über seine Länge verteilt in den Zwischenraum zwischen der Innenwandung und der Außenwandung des Kühlraums einleitet. Das Kühlmittel wird hierbei also gleichmäßig in den Zwischenraum zwischen der Innenwandung und der Außenwandung des Kühlraums eingeleitet, was vorteilhaft zu einer gleichmäßigen Temperaturverteilung in dem Kühlraum führt, da der Kühlraum von allen Seiten gleichmäßig gekühlt wird.

Darüber hinaus besteht im Rahmen der Erfindung die Möglichkeit, dass in dem Kühlraum ein Heizelement angeordnet ist, um den Kühlraum zu erwärmen oder das in dem Kühlraum befindliche Kühlgut zu aufzutauen. Vorzugsweise ist dieses Heizelement unter bzw. in einer Heizplatte angeordnet, wobei die Heizplatte vorzugsweise mehrere Durchlässe aufweist, die eine Gaszirkulation ermöglichen.

Hierbei besteht die Möglichkeit, auf den Kühlraum eine abnehmbare Schutzglocke aufzusetzen, um das Eindringen von Feuchtigkeit in den Kühlraum zu vermeiden. Vorzugsweise ist diese Schutzglocke mindestens teilweise durchsichtig, um eine Sichtkontrolle des in dem Kühlraum befindlichen Kühlguts zu ermöglichen.

In einem bevorzugten Ausführungsbeispiel der Erfindung weist die Schutzglocke eine Probenschleuse auf, durch die das Kühlgut in den Kühlraum eingeführt bzw. aus dem Kühlraum entnommen werden kann, wobei die Probenschleuse einen Wärmeaustausch mit der Umgebung weitgehend verhindert.

Ferner kann an der Unterseite der Schutzglocke und/oder an der Oberseite des Kühlraums ein Kaltgasauslass angeordnet sein, über den Kühlmittel oder Kaltgas aus dem Kühlraum entweichen kann. Dieser Kaltgasauslass verursacht einen großen Temperaturgradienten in der Höhe des Kaltgasauslasses, wobei die Temperatur oberhalb des Kaltgasauslasses wesentlich höher ist als unterhalb des Kaltgasauslasses. Auf diese Weise wird vorteilhaft ein Beschlagen der Schutzglocke verhindert.

Weiterhin erfolgt im Rahmen der Erfindung vorzugsweise eine Regelung der Temperatur in dem Kühlraum. Hierzu weist die erfindungsgemäße Kühleinrichtung vorzugsweise einen in dem Kühlraum angeordneten Temperatursensor auf, um die Temperatur in dem Kühlraum zu messen bzw. zu regulieren. Als Stellglied zur Temperatureinstellung ist dann vorzugsweise ein steuerbares Kühlmittelventil vorgesehen, das die Menge des zugeführten Kühlmittels bzw. den Kühlmittelstrom einstellt. Die eigentliche Temperaturregelung erfolgt dann durch einen Temperaturregler, der eingangsseitig mit dem Temperatursensor verbunden ist und ausgangsseitig das Kühlmittelventil entsprechend einem vorgegebenen Temperatur-Sollwert ansteuert.

Die Ansteuerung des Kühlmittelventils durch den Temperaturregler kann hierbei über einen Taktgeber erfolgen, der das Kühlmittelventil abwechselnd öffnet und schließt, wobei die Öffnungs- und Schließzeiten des Kühlmittelventils von dem Taktgeber vorgegeben und von dem Temperaturregler eingestellt werden. Die Kühlmittelzufuhr erfolgt hierbei also diskontinuierlich, indem das Kühlmittelventil abwechselnd öffnet und schließt.

Vorzugsweise ist der Temperatursensor zur Erfassung der Temperatur in dem Kühlraum hierbei auf der Bearbeitungsposition des Kühlraums angeordnet, um die optimale Bearbeitungstemperatur in dem Kühlraum zu messen bzw. zu regulieren.

Der Temperaturregler regelt die Temperatur in dem Kühlraum deshalb vorzugsweise so, dass sich am Boden des Kühlraums kein Kühlmittelsee bildet.

Ferner ist zu erwähnen, dass es sich bei dem Kühlmittel vorzugsweise um flüssigen Stickstoff handelt, wobei die Erfindung jedoch nicht auf Stickstoff als Kühlmittel beschränkt ist, sondern auch mit anderen flüssigen oder gasförmigen Kühlmitteln realisierbar ist, die in den Zwischenraum zwischen der Innenwandung und der Außenwandung des Kühlraums eingeleitet werden können.

Die erfindungsgemäße Kühleinrichtung kann für verschiedene Temperaturbereiche eingesetzt werden, wie beispielsweise bei Temperaturen von ungefähr -150°C, -130°C, -80°C, -40°C, +4°C oder +37°C, wobei die vorstehend erwähnten Temperaturbereiche beispielsweise eine Bandbreite von ±10°C, ±5°C oder ±2°C umfassen können. Eine Temperatur von 37°C ist vorteilhaft, weil die Wachstumstemperatur von biologischen Zellen dann optimal ist. Eine Temperatur von +4°C bietet dagegen den ist. Eine Temperatur von +4°C bietet dagegen den Vorteil, dass die physiologischen Prozesse in den Zellen verlangsamt sind. Bei einer Manipulation von Zellen bei einer Temperatur von weniger als 4°C ist die Zellschädigung geringer (z.B. mit Tropsia und DMSO).

Schließlich umfasst die Erfindung nicht nur die vorstehend beschriebene Kühleinrichtung als Gerät, sondern auch die Verwendung einer solchen Kühleinrichtung zur Untersuchung, Bearbeitung und/oder Manipulation einer Kryoprobe.

Andere vorteilhafte Weiterbildungen der Erfindung sind in Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine erfindungsgemäße Schutzhaube in perspektivischer Darstellung,
- Figur 2: ein alternatives Ausführungsbeispiel einer Schleuse der in Figur 1 gezeigten Schutzhaube in einer Perspektivansicht
- Figur 3: ein alternatives Ausführungsbeispiel einer erfindungsgemäßen Vorrichtung mit einem zylindrischen Schutzbehälter,
- Figur 4: eine Seitenschnittansicht einer begehbaren Kryotankglocke,
- Figur 5: ein nicht erfindungsgemäßes Ausführungsbeispiel einer derartigen Kryotankglocke,
- Figur 6: ein einfaches Ausführungsbeispiel einer tragbaren Schutzglocke in einer Seitenansicht,
- Figur 7: eine Perspektivansicht eines alternativen Ausführungsbeispiels einer erfindungsgemäßen Vorrichtung,
- Figur 8: eine Perspektivansicht eines bevorzugten Ausführungsbeispiels der erfindungsgemäßen Kühleinrichtung mit einer aufgesetzten Schutzglocke,
- Figur 9: eine Perspektivansicht der Schutzglocke aus Figur 8 im abgenommenen Zustand,
- Figur 10: eine Querschnittsansicht der Wandstruktur des Kühlraums bei der Kühleinrichtung aus Figur 8,
- Figur 11: eine vereinfachte perspektivische Darstellung der Kühlmittelzufuhr bei der Kühleinrichtung aus Figur 8 sowie
- Figur 12: ein regelungstechnisches Ersatzschaltbild der Kühleinrichtung aus Figur 8.

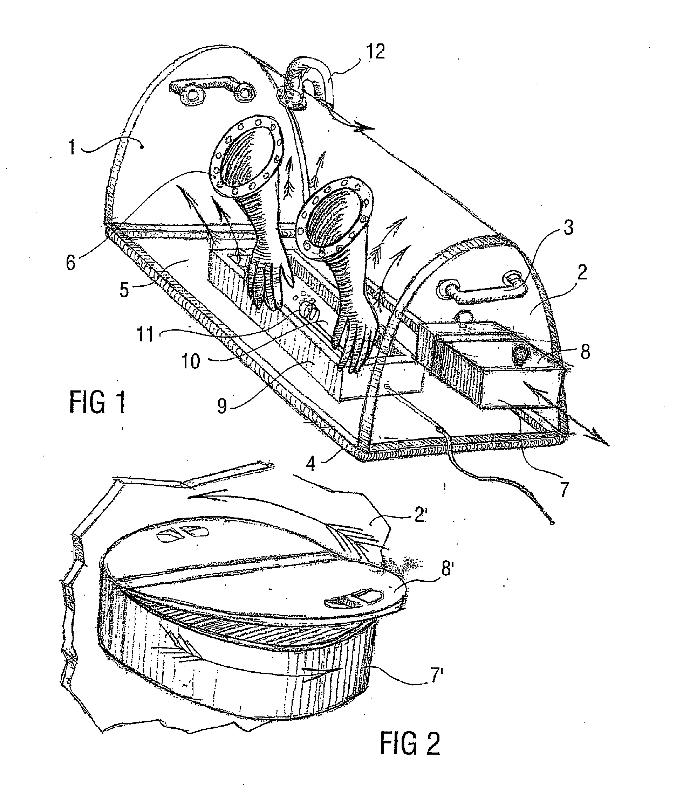

Die Querschnittsansicht in Figur 1 zeigt eine Schutzhaube 1 aus Plexiglas mit einer Wandungsstärke von 12 mm und einem im wesentlichen parabolischen Querschnitt, wobei die Stirnseiten der Schutzhaube 1 beidseitig durch jeweils eine Abschlusswand 2 verschlossen sind.

An den Abschlusswänden 2 ist im oberen Bereich jeweils ein Handgriff 3 befestigt, so dass die Schutzhaube 1 von einer Bedienungsperson angehoben und versetzt werden kann.

Weiterhin ist zu erwähnen, dass die Wandung der Schutzhaube 1 vollständig durchsichtig ist, was der Bedienungsperson eine Sichtkontrolle des Innenraums der Schutzhaube 1 ermöglicht.

An ihrer Unterseite weist die Schutzhaube 1 eine umlaufende Dichtung 4 auf, welche die Schutzhaube 1 nach ihrem aufsetzen auf eine Laboroberfläche 5 abdichtet.

Weiterhin weist die Schutzhaube 1 in dem parabolischen Teil ihrer Behälterwandung zwei Eingriffe 6 auf, über welche die außenstehende Bedienungsperson in dem Innenraum der Schutzhaube 1 hantieren kann.

Ferner weist die Schutzhaube 1 eine gasaustauschreduzierte Schleuse 7 auf, die als Schublade ausgebildet und in der Abschlusswand 2 der Schutzhaube 1 angeordnet ist. An ihrer Oberseite weist die Schleuse 7 einen Deckel 8 auf, der zum Einführen oder zur Entnahme eines Teils aus der Schutzhaube 1 hochgeklappt werden kann.

Auf der Laboroberfläche 5 befindet sich als Klimatisierungseinrichtung eine Wanne 9, die mit flüssigem Stickstoff 10 gefüllt ist. Nach dem Aufsetzen der Schutzhaube 1 auf die Wanne 9 füllt der aus der Wanne 9 ausgasende Stickstoff den Innenraum der Schutzhaube 1 und dient dabei als Schutzgas, wie noch detailliert beschrieben wird.

In der Wanne 9 ist hierbei ein elektrisches Heizelement 11 angeordnet, um den in der Wanne 9 befindlichen flüssigen Stickstoff 10 zu erwärmen und dadurch das Ausgasen des Stickstoffs zu beschleunigen.

Ferner ist an der Oberseite der Schutzhaube 1 eine Austrittsöffnung angeordnet, an die ein Abführrohr 12 angeschlossen ist, über das überschüssiges Stickstoffgas aus dem Innenraum der Schutzhaube 1 abgeleitet werden kann.

Das Abführrohr 12 ist hierbei U-förmig, wobei die freie Mündungsöffnung des Abführrohrs 12 nach unten gerichtet ist, um das Einfallen von relativ feuchter Umgebungsluft in den Innenraum der Schutzhaube 1 zu verhindern.

Die vorstehend beschriebene Schutzhaube 1 kann auf einen zur Vereinfachung nicht dargestellten Kryoprobenbehälter aufgesetzt werden, wobei das Ausgasen von Stickstoffgas aus der Wanne 9 verhindert, dass bei einer Entnahme einer Kryoprobe aus dem Kryoprobenbehälter Kondensationen oder gar Eisbildungen an der Kryoprobe bilden.

Die Perspektivansicht in Figur 2 zeigt ein alternatives Ausführungsbeispiel einer Schleuse 7', die anstelle der in Figur 1 gezeigten Schleuse 7 eingesetzt werden kann. Die Schleuse 7' stimmt weitgehend mit der in Figur 1 gezeigten Schleuse 7 überein, so dass für entsprechende Bauteile dieselben Bezugszeichen verwendet werden, die jedoch zur Unterscheidung durch einen Apostroph gekennzeichnet sind.

Eine Besonderheit der Schleuse 7' im Vergleich zu der Schleuse 7 besteht darin, dass diese nicht als verschiebbare Schublade ausgebildet ist, sondern in der Abschlusswand 2' drehbar gelagert ist.

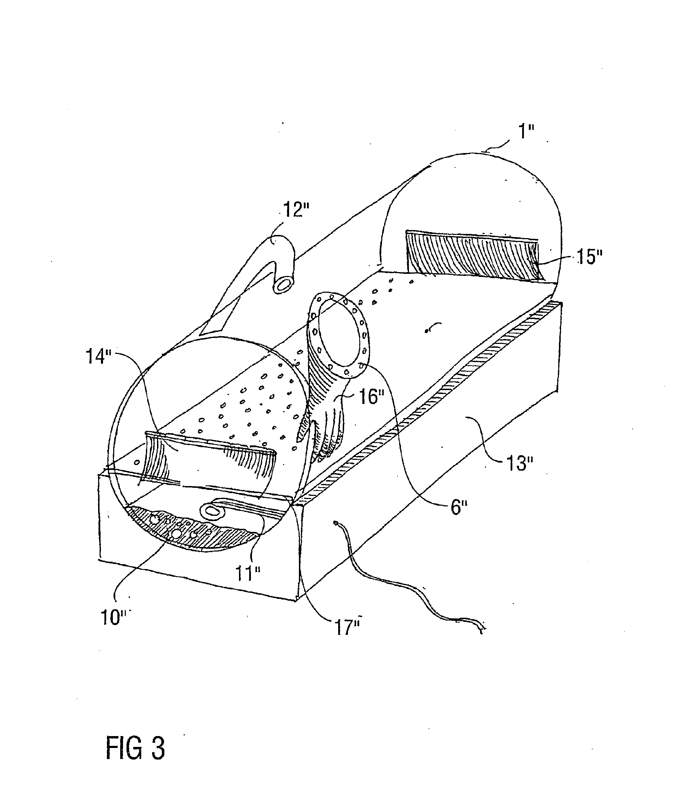

Das in Figur 3 dargestellte Ausführungsbeispiel einer erfindungsgemäßen Vorrichtung stimmt weitgehend mit dem in Figur 1 gezeigten und vorstehend beschriebenen Ausführungsbeispiel überein, so dass zur Vermeidung von Wiederholungen weitgehend auf die vorstehende Beschreibung zu Figur 1 verwiesen wird und für entsprechende Bauteile dieselben Bezugszeichen verwendet werden, die jedoch zur Unterscheidung durch zwei Apostrophe gekennzeichnet sind.

Eine Besonderheit dieses Ausführungsbeispiels besteht darin, dass ein zylindrischer Schutzbehälter 1" anstelle der parabolischen Schutzhaube 1 verwendet wird, wobei der Schutzbehälter 1" stationär in einer Isolierwanne 13" angeordnet ist, die den Schutzbehälter 1" thermisch isoliert.

Weiterhin weist der Schutzbehälter 1" an beiden Stirnseiten jeweils eine Schleuse zur Entnahme oder zum Einführen von Teilen auf, wobei die beiden Schleusen jeweils aus einer Öffnung in der Stirnseite des Schutzbehälters 1" und einem flexiblen Vorhang 14", 15" bestehen, der die jeweilige Öffnung flexibel abdeckt und dadurch das Eindringen relativ feuchter Luft von außen in den Schutzbehälter 1" verhindert.

Weiterhin ist in der Zeichnung nur ein einziger Eingriff 6" dargestellt, der an der Innenseite des Schutzbehälters 1" in einen Gummihandschuh 16" mündet, jedoch ist zusätzlich ein weiterer Eingriff vorgesehen, der zur Vereinfachung nicht dargestellt ist.

In einem unteren Bereich des Schutzbehälters 1" befindet sich verflüssigter Stickstoff 10", der durch ein Heizelement 11" erhitzt wird, so das Stickstoffgas in den Innenraum des Schutzbehälters 1" ausgast.

Oberhalb des verflüssigten Stickstoffs 10" befindet sich eine Arbeitsplattform 17" mit Löchern zum Durchtritt des von unten ausgasenden Stickstoffgases.

Im Betrieb können Kryoprobenbehälter mit darin befindlichen Kryoproben in den Innenraum des Schutzbehälters 1" eingeführt und im Inneren des Schutzbehälters 1" manipuliert werden, ohne dass die Gefahr von Kondensationen oder Eisbildungen an den Kryoprobenbehältern besteht.

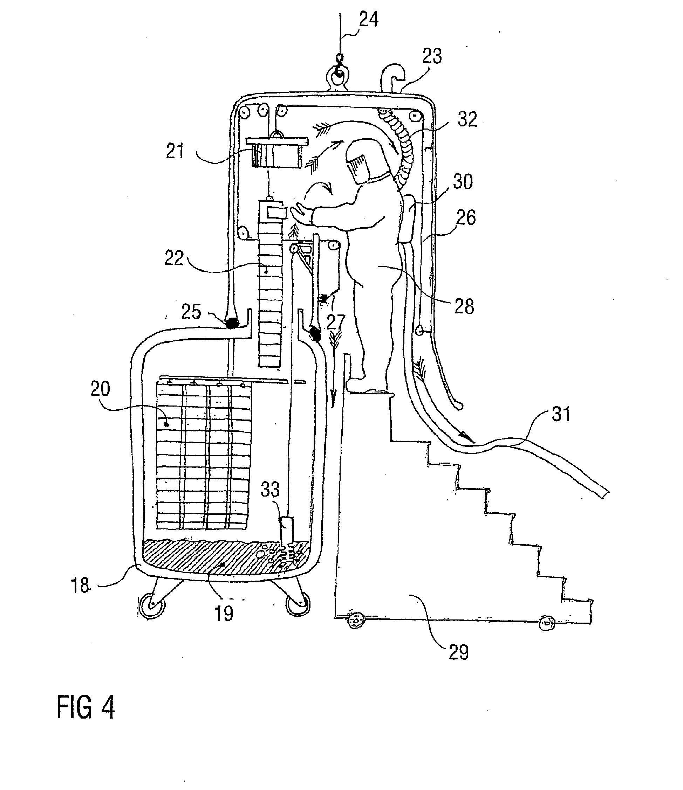

Die Querschnittszeichnung in Figur 4 zeigt zunächst einen herkömmlichen Kryotank 18, in dem sich an der Unterseite verflüssigter Stickstoff 19 befindet.

In dem Kryotank 18 sind mehrere Kryoprobenbehälter 20 aufgehängt, die durch den verflüssigten Stickstoff 19 gekühlt werden und jeweils zahlreiche Kryoproben enthalten.

An seiner Oberseite weist der Kryotank 18 eine Tanköffnung auf, die durch einen Tankdeckel 21 verschlossen werden kann, wobei der Tankdeckel 21 in der Zeichnung in einer angehobenen Position dargestellt ist, in der ein Kryoprobenbehälter 22 durch die Tanköffnung des Kryotanks 18 entnommen wird.

Bei einer derartigen Entnahme des Kryoprobenbehälters 22 besteht herkömmlicherweise die Gefahr, dass Luftfeuchtigkeit aus der Umgebungsluft in den Kryotank 18 einfällt, was in dem Kryotank 18 zu unerwünschten Eisbildungen führt. Darüber hinaus können sich bei den herkömmlichen Entnahmeverfahren an dem Kryoprobenbehälter 22 Kondensationen und nachfolgend Eisbildung auftreten, was ebenfalls unerwünscht ist.

Zur Verhinderung dieser unerwünschten Effekte weist die Erfindung eine Kryotankglocke 23 auf, die über einen Seilzug 24 angehoben und anschließend auf die Tanköffnung des Kryotanks 18 aufgesetzt werden kann, wobei eine Dichtung 25 die Tanköffnung des Kryotanks 18 abdichtet.

Mittels eines weiteren Seilzugs 26 kann dann über zwei Umlenkrollen der Tankdeckel 21 des Kryotanks 18 angehoben werden, um die Tanköffnung des Kryotanks 18 für eine Entnahme des Kryoprobenbehälters 22 frei zu geben.

Die Entnahme des Kryoprobenbehälters 22 erfolgt dann über einen weiteren Seilzug 27, der in einen entsprechenden Haken an den Kryoprobenbehälter 22 eingehängt wird.

Die Bedienung der beiden Seilzüge 26, 27 und die Manipulation des Kryoprobenbehälters 22 erfolgt hierbei durch eine Bedienungsperson 28, die über eine rollbare Treppe 29 in die begehbare Kryotankglocke 23 hinein steigen kann.

Die Bedienungsperson 28 trägt hierbei einen Schutzanzug und eine Atemluftversorgung 30, die über eine Leitung 31 mit einer außerhalb der Kryotankglocke angeordneten Versorgungseinheit verbunden ist, wobei die Versorgungseinheit zur Vereinfachung nicht dargestellt ist.

Alternativ zu der Atemluftversorgung 30 kann auch ein einfacher Atemluftschlauch 32 vorgesehen sein, der aus der Kryotankglocke 23 heraus geführt ist, wobei die freie Mündungsöffnung des Atemluftschlauchs 32 an der Außenseite der Kryotankglocke 23 nach unten abgewinkelt ist, um das Einfallen von feuchter Umgebungsluft in die Kryotankglocke in jedem Fall zu verhindern.

Die Klimatisierung des Gasvolumens innerhalb der Kryotankglocke 23 erfolgt hierbei durch ein elektrisches Heizelement 33, das von der Bedienungsperson 28 über einen Seilzug in den Kryotank 18 abgelassen wird, so dass das Heizelement 33 den verflüssigten Stickstoff 19 erwärmt und dadurch die Ausgasung von Stickstoffgas in den Innenraum der Kryotankglocke 23 beschleunigt.

Durch das ausgasende Stickstoffgas werden Kondensationen oder gar Eisbildungen an dem entnommenen Kryoprobenbehälter 22 verhindert.

Darüber hinaus wird durch die Kryotankglocke 23 verhindert, dass beim Öffnen des Tankdeckels 21 feuchte Umgebungsluft in den Kryotank 18 fällt, was dort ebenfalls zu einer unerwünschten Eisbildung führen würde.

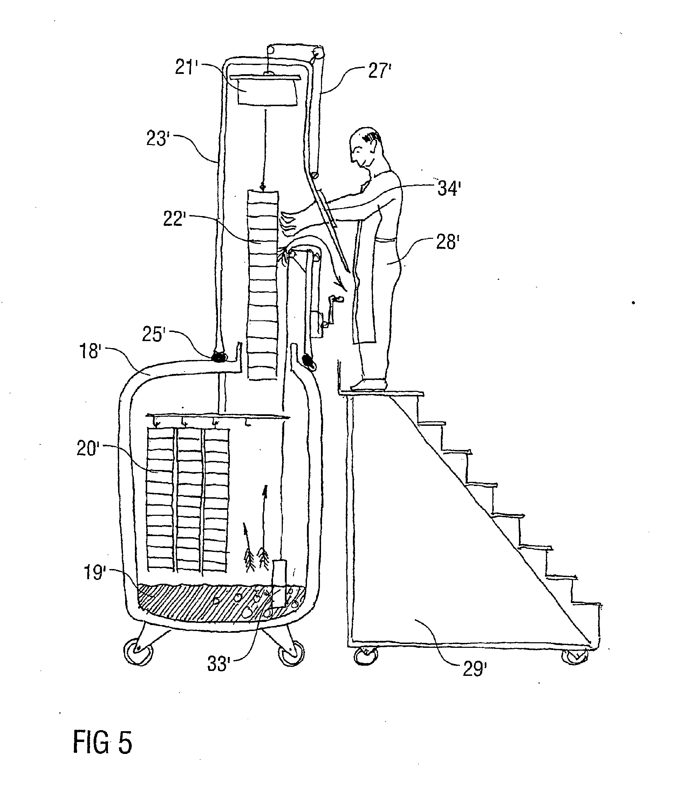

Das in Figur 5 dargestellte Ausführungsbeispiel stimmt weitgehend mit dem vorstehend beschriebenen und in Figur 4 dargestellten Ausführungsbeispiel überein, so dass zur Vermeidung von Wiederholungen weitgehend auf die vorstehende Beschreibung verwiesen wird und für entsprechende Bauteile dieselben Bezugszeichen verwendet werden, die jedoch zur Unterscheidung durch einen Apostroph gekennzeichnet sind.

Eine Besonderheit dieses Ausführungsbeispiels besteht darin, dass die Kryotankglocke 23' nicht begehbar ist.

Stattdessen weist die Kryotankglocke Eingriffe 34' auf, durch die hindurch die Bedienungsperson 28' den aus dem Kryotank 18' herausgehobenen Kryoprobenbehälter 22' manipulieren kann.

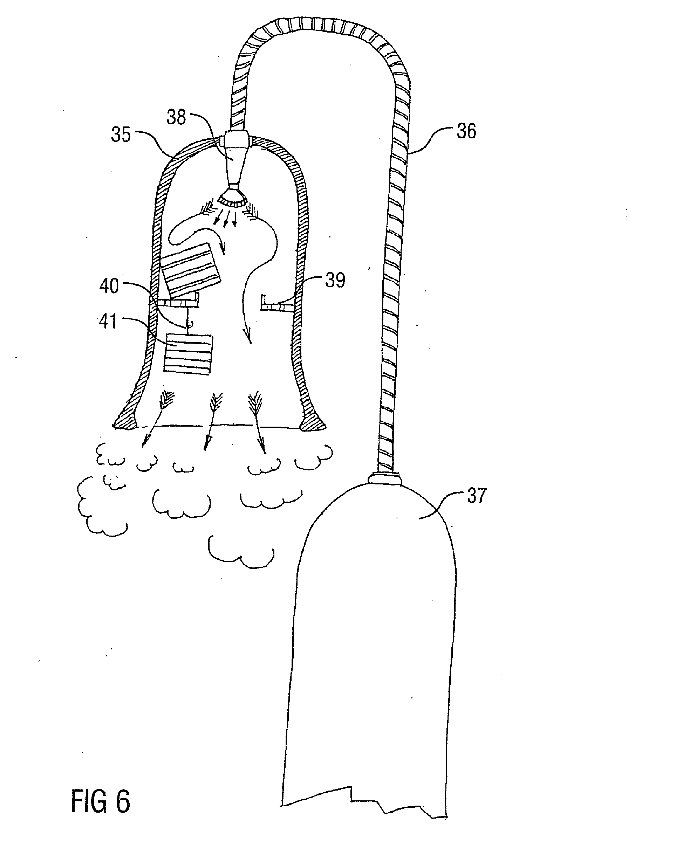

Das in Figur 6 dargestellte Ausführungsbeispiel einer erfindungsgemäßen Vorrichtung besteht im Wesentlichen aus einer Schutzglocke 35, die über eine Gasleitung 36 mit einem Stickstoff-Druckgasbehälter 37 verbunden ist, wobei die Gasleitung 36 in der Schutzglocke 35 in eine Düsenanordnung 38 mündet, durch die Stickstoff in den Innenraum der Schutzglocke 35 abgegeben wird.

In der Schutzglocke 35 befinden sich Ablagen 39 und Einhängevorrichtungen 40 zur Halterung von Kryoprobenbehältern 41. Die Kryoprobenbehälter 41 sind hierbei innerhalb der Schutzglocke 35 angeordnet und werden dadurch von dem aus der Düsenanordnung 38 ausströmenden Stickstoffgas geschützt, wodurch eine Kondensation an den Kryoprobenbehältern 41 oder gar eine Eisbildung verhindert wird.

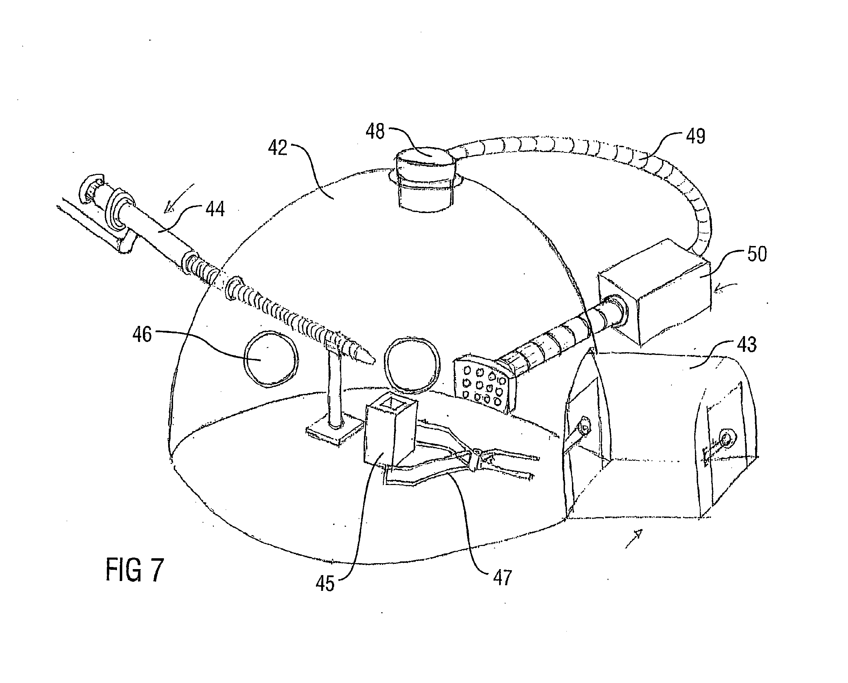

Schließlich zeigt Figur 7 ein weiteres Ausführungsbeispiel der Erfindung mit einem Schutzbehälter 42, in den über eine Schleuse 43 Kryoproben oder sonstige Teile eingebracht oder entnommen werden können.

Über eine Gaszuleitung 44 wird hierbei Stickstoffgas in den Schutzbehälter 42 eingeleitet und dort auf einen Kryoprobenbehälter 45 gerichtet.

Der Kryoprobenbehälter 45 kann hierbei durch zwei Eingriffe 46 von außen durch eine Bedienungsperson manipuliert werden, wozu beispielsweise eine Zange 47 verwendet werden kann.

An der Oberseite des Schutzbehälters 42 befindet sich ein steuerbares Ventil 48, das zu Beginn eine Abführung der in dem Schutzbehälter 42 befindlichen relativ feuchten Luft ermöglicht, solange der Schutzbehälter 42 noch nicht vollständig mit Stickstoffgas gefüllt ist.

Anschließend leitet das Ventil 48 das an der Oberseite austretende Stickstoffgas über einen Schlauch 49 zu einer Umluftanlage 50, die das über das Ventil 48 abgeführte Stickstoffgas wieder in den Schutzbehälter 42 einleitet.

Auch bei diesem Ausführungsbeispiel verhindert das den Kryoprobenbehälter 45 umgebende Stickstoffgas eine Kondensation oder gar eine Eisbildung an dem Kryoprobenbehälter 45.

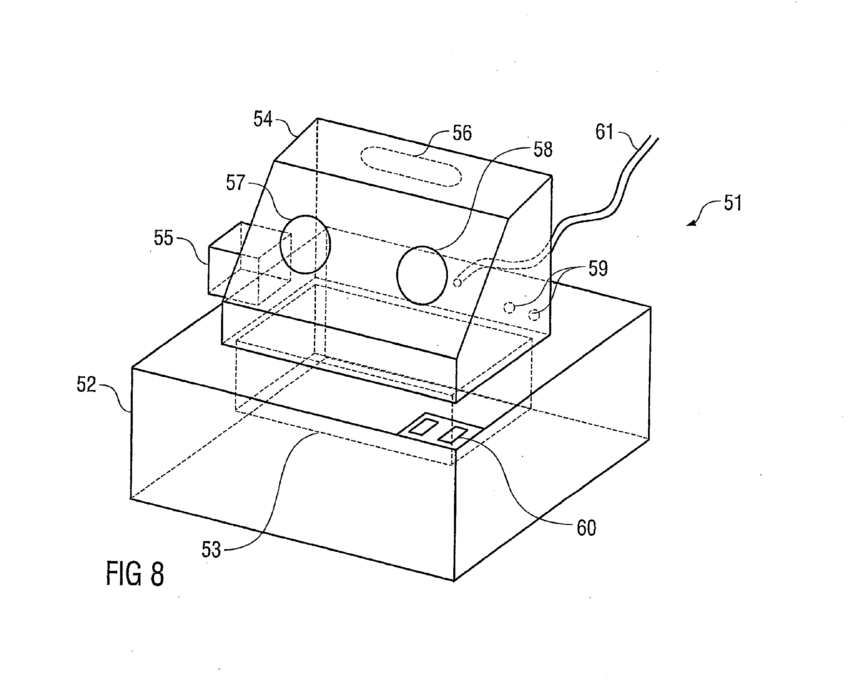

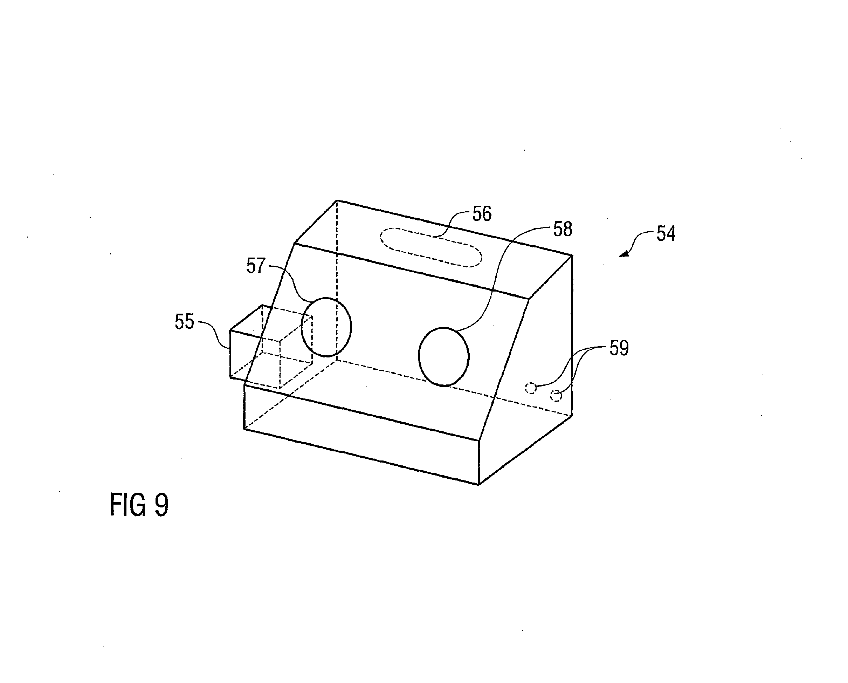

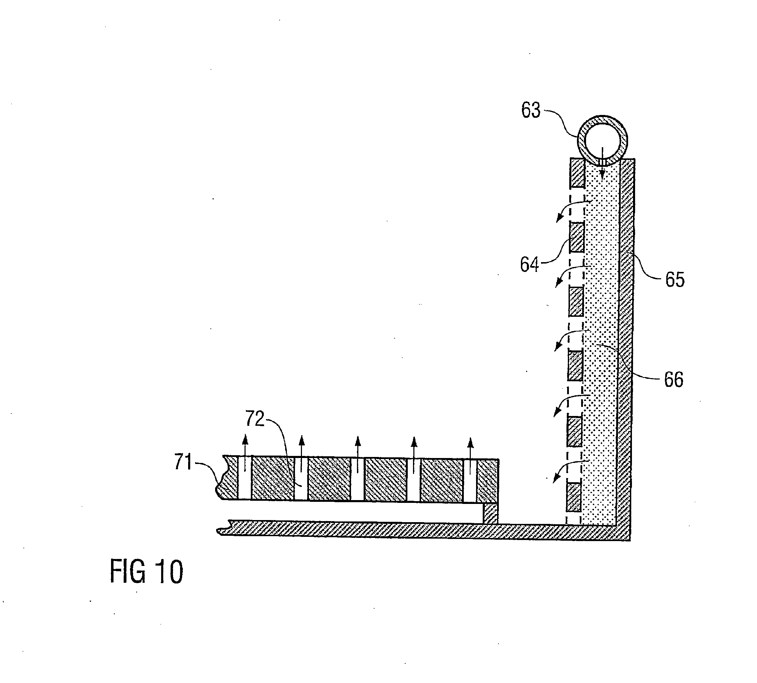

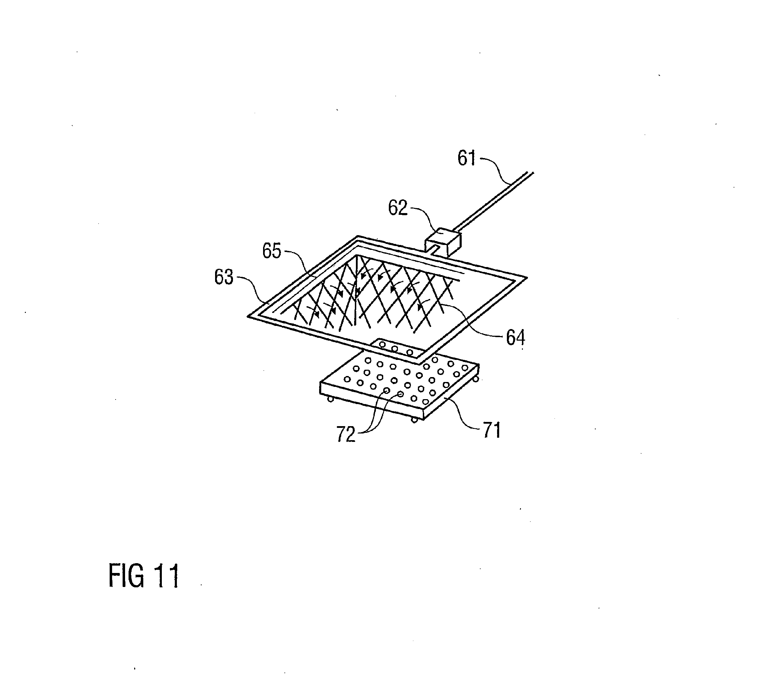

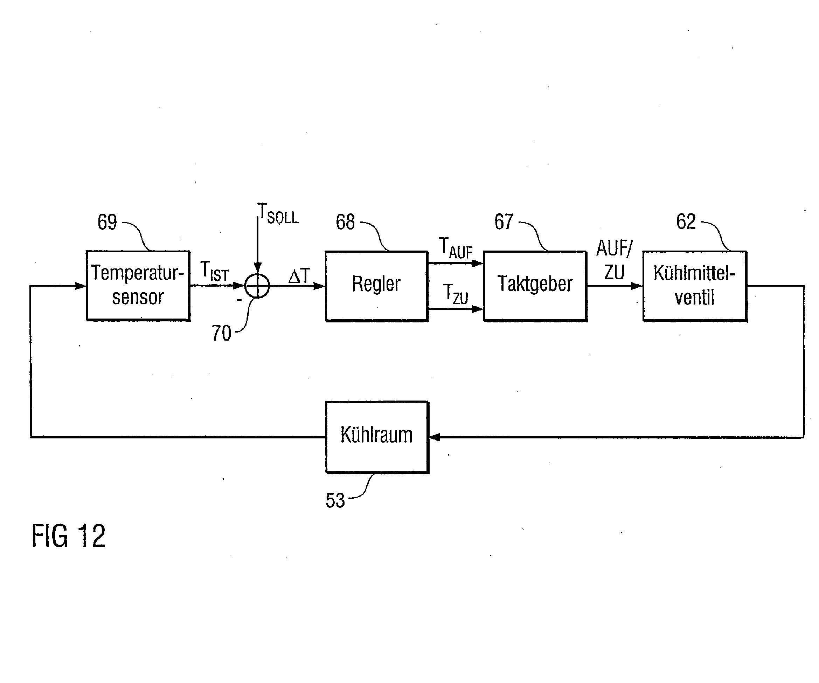

Das in den Figuren 8-12 dargestellte Ausführungsbeispiel einer erfindungsgemäßen Kühleinrichtung 51 dient zur Temperierung eines Kühlraums zur Aufnahme von Kryoproben bei einer Untersuchung, Manipulation und/oder Bearbeitung.

Hierzu weist die Kühleinrichtung 51 eine Kryo-Wanne 52 mit einem wannenförmigen, oben offenen Kühlraum 53 auf, wobei auf die Kryo-Wanne 52 eine abnehmbare Schutzglocke 54 aufgesetzt ist, die das Eindringen von Feuchtigkeit aus der Umgebung in den Kühlraum verhindert und detailliert in Figur 2 dargestellt ist.

Die Schutzglocke 54 weist zur Einführung der Kryoproben in den Kühlraum 53 und zur Entnahme der Kryoproben aus dem Kühlraum 53 eine Probenschleuse 55 auf, die seitlich an der Schutzglocke 54 angebracht ist und beim Einführen der Kryoproben bzw. bei der Entnahme der Kryoproben einen Wärmeaustausch mit der Umgebung weitgehend verhindert und die Feuchtigkeit in dem Kühlraum 53 minimiert.

Weiterhin weist die Schutzglocke 54 an ihrer Oberseite eine Lampe 56 auf, um den Kühlraum 53 zu beleuchten und die Manipulation der in dem Kühlraum 53 befindlichen Kryoproben dadurch zu erleichtern.

Die Schutzglocke 54 selbst besteht hierbei aus einem durchsichtigen Material, was eine einfache Sichtkontrolle durch eine Bedienungsperson erlaubt.

An der abgeschrägten Vorderseite der Schutzglocke 54 befinden sich zwei herkömmliche Handschuhmanschetten 57, 58, durch die eine Bedienungsperson die in dem Kühlraum 53 befindlichen Kryoproben ohne Gasaustausch manipulieren kann.

Ferner befinden sich an der Rückseite der Schutzglocke 54 unten zwei Öffnungen 59, über die Kaltgas aus der Schutzglocke 54 austreten kann. Die beiden Öffnungen 59 haben zur Folge, dass sich in der Höhe der beiden Öffnungen 59 ein großer Temperaturgradient einstellt, da Kaltgas aus den beiden Öffnungen 59 nach außen entweicht. Die Atmosphäre in der Schutzglocke 54 oberhalb der Öffnungen 59 ist deshalb wesentlich wärmer als unterhalb der Öffnungen 59, was einem Beschlagen der Innenwände der Schutzglocke 54 entgegenwirkt.

An der Oberseite der Kryo-Wanne 52 befindet sich an der an der Vorderseite weiterhin ein Bedien- und Anzeigefeld 60, an dem die Temperatur in dem Kühlraum 53 angezeigt und eingestellt werden kann.

Die Kühlung des Kühlraums 53 erfolgt hierbei durch flüssigen Stickstoff, der aus einem Stickstofftank (z.B. einem Apollo-Behälter) über eine Stickstoffleitung 61 zugeführt wird, wobei die Stickstoffleitung 61 nicht direkt in den Kühlraum 53. mündet, um die Bildung eines Stickstoffsees am Boden des Kühlraums 53 zu vermeiden. Stattdessen mündet die Stickstoffleitung 61 über ein elektrisch steuerbares Kühlmittelventil 62 in eine Kühlmittelzuleitung 63, wobei sich die Kühlmittelzuleitung 63 entlang dem umlaufenden Rand des wannenförmigen Kühlraums 53 erstreckt und den flüssigen Stickstoff über die Länge verteilt angibt.

Der Kühlraum 53 ist hierbei von einer aus Metall bestehenden, gitterförmigen Innenwandung 64 begrenzt, die von einer Außenwandung 65 umschlossen wird, wobei die Innenwandung 64 und die Außenwandung 65 einen Zwischenraum einschließen, in dem ein Puffermaterial 66 angeordnet ist. Die Kühlmittelzuleitung 63 ist in seitlicher Richtung zwischen der Innenwandung 64 und der Außenwandung 65 oberhalb des Puffermaterials 66 angeordnet und weist nach unten gerichtete Austrittsöffnungen auf, durch die flüssiger Stickstoff aus dem Inneren der Kühlmittelzuleitung 63 in das Puffermaterial 66 abgegeben wird. Das Puffermaterial 66 absorbiert den flüssigen Stickstoff und gibt diesen kontinuierlich durch die gitterförmige Innenwandung 64 hindurch in den Kühlraum 53 ab.

Das Kühlmittelventil 62 arbeitet hierbei diskontinuierlich, indem das Kühlmittelventil 62 entweder schließt oder öffnet.

Die Ansteuerung des Kühlmittelventils 62 erfolgt hierbei durch einen Taktgeber 67, wobei die Öffnungszeit T_{AUF} und die Schließzeit T_{ZU} für das Kühlmittelventil 62 von einem Regler 68 vorgegeben werden, um das Kühlmittel zu dosieren.

Die Regelung erfolgt hierbei in Abhängigkeit von der Temperatur in dem Kühlraum 3, die von einem Temperatursensor 69 gemessen wird, wobei der Temperatursensor 69 an der Bearbeitungsposition des Kühlraums 53 angeordnet ist.

Der Temperatursensor 69 misst deshalb eine Temperatur T_{IST} und liefert diese an einen Subtrahierer 70 weiter, der als weitere Eingangsgröße einen Sollwert T_{SOLL} für die Temperatur in dem Kühlraum 53 erhält und eine Soll-Ist-Abweichung ΔT berechnet.

Der Regler 68 stellt die Öffnungszeit T_{AUF} und die Schließzeit T_{ZU} für das Kühlmittelventil 62 dann so ein, dass die gewünschte Temperatur (z.B. -630°C) in dem Kühlraum 53 herrscht, ohne dass sich am Boden des Kühlraums 53 ein Stickstoffsee bildet.

Weiterhin ist auf dem Boden des Kühlraums 53 eine Heizplatte 71 angeordnet, die eine Beheizung der Kryoprobe und des Kühlraums 53 ermöglicht.

In der Heizplatte 71 sind hierbei zahlreiche senkrecht durchgehende Durchlässe 72 angeordnet, die eine Gaszirkulation ermöglichen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Vorrichtung zur Handhabung einer Probe, insbesondere zur Bearbeitung, Untersuchung oder Ein- oder Auslagerung einer Kryoprobe, wobei die Probe während der Handhabung von einem Umgebungsgas umgeben ist, mit
- einer Klimatisierungseinrichtung (9-11, 10", 11"), die das Umgebungsgas kühlt, trocknet und/oder mindestens teilweise durch ein Schutzgas ersetzt, um während der Handhabung eine Beeinträchtigung der Probe durch das Umgebungsgas zu vermeiden,
- einem Schutzbehälter (1, 1") zur Aufnahme der Probe während der Handhabung, wobei die Klimatisierungseinrichtung (9-11, 10", 11") mit dem Schutzbehälter (1, 1") verbunden ist, um das in dem Schutzbehälter (1, 1") befindliche Umgebungsgas zu trocknen, zu kühlen und/oder durch das Schutzgas zu ersetzen,
- einer Schutzgasquelle (9, 10, 10"), die Teil der Klimatisierungseinrichtung (9-11, 10", 11") ist, um den Schutzbehälter (1, 1") mindestens teilweise mit einem Schutzgas zu füllen, wobei das Schutzgas eine Beeinträchtigung der Probe während ihrer Handhabung verhindert,
- wobei die Schutzgasquelle (9, 10, 10") ein mindestens teilweise offenes Schutzgasvorratsgefäß (9) aufweist, in dem sich verflüssigtes Schutzgas befindet, das in den Schutzbehälter (1, 1") ausgast,
**dadurch gekennzeichnet, dass**
- das Schutzgasvorratsgefäß (9) ein Filterelement aufweist, um in dem verflüssigten Schutzgas befindliche Bakterien, Viren oder andere Partikel beim Ausgasen zurückzuhalten.

2. Vorrichtung nach Anspruch 1, **dadurch gekennzeichnet, dass** zur Erwärmung des in dem Schutzgasvorratsgefäß (9) befindlichen verflüssigten Schutzgases und zur Förderung der Ausgasung des Schutzgases ein Heizelement (11, 11") vorgesehen ist.

3. Vorrichtung nach einem der vorhergehenden Ansprüche, **dadurch gekennzeichnet, dass** der Schutzbehälter (1) mobil ist und an seiner Unterseite eine Öffnung aufweist, um die Probe in den Schutzbehälter (1) einzuführen oder daraus zu entnehmen oder um den Schutzbehälter (1) auf die Probe aufzusetzen.

4. Vorrichtung nach einem der vorhergehenden Ansprüche, **dadurch gekennzeichnet,**
a) **dass** der Schutzbehälter (1, 1") eine mindestens teilweise durchsichtige Behälterwandung aufweist, um während der Handhabung der Probe eine Sichtkontrolle zu ermöglichen, und/oder
b) **dass** an der Oberseite des Schutzbehälters (1, 1") eine Austrittsöffnung zur Ableitung des überschüssigen Umgebungsgases angeordnet ist.

5. Vorrichtung nach Anspruch 4, **dadurch gekennzeichnet, dass** an die Austrittsöffnung des Schutzbehälters (1, 1") außen ein Abführrohr (12, 12") angeschlossen ist, das eine außerhalb des Schutzbehälters (1, 1") befindliche und nach unten gerichtete Mündungsöffnung aufweist.

6. Vorrichtung nach einem der vorhergehenden Ansprüche, **dadurch gekennzeichnet,**
a) **dass** der Schutzbehälter (1, 1") mindestens einen gasdichten oder gasaustauschreduzierten Eingriff (6, 6") aufweist, um die in dem Schutzbehälter (1, 1") befindliche Probe bearbeiten zu können, und/oder
b) **dass** zum Einführen der Probe in den Schutzbehälter (1, 1") und zur Entnahme der Probe aus dem Schutzbehälter (1, 1") eine gasdichte oder gasaustauschreduzierte Schleuse (7, 7") vorgesehen ist.

7. Vorrichtung nach Anspruch 6, **dadurch gekennzeichnet,**
a) **dass** die Schleuse aus einer Öffnung in dem Schutzbehälter (1") und einem die Öffnung abdeckenden flexiblen Vorhang (14", 15") besteht, und/oder
b) **dass** auf gegenüberliegenden Seite des Schutzbehälters (1") jeweils eine Schleuse (14", 15") angeordnet ist, um einen automatisierten Betrieb zu ermöglichen.

8. Vorrichtung nach einem der vorhergehenden Ansprüche, **dadurch gekennzeichnet,**
a) **dass** der Schutzbehälter (1, 1") eine wärmeisolierende Behälterwandung aufweist, um kältebedingte Kondensationen an deren Außenseite zu verhindern, und/oder
b) **dass** der Schutzbehälter (1, 1") eine beheizbare Behälterwandung aufweist, um kältebedingte Kondensationen an deren Außenseite zu verhindern, und/oder
c) **dass** in dem Schutzbehälter (1, 1") mindestens eine UV-Lampe zur Sterilisierung angebracht ist.

9. Vorrichtung nach einem der vorhergehenden Ansprüche, **dadurch gekennzeichnet,**
a) **dass** der Schutzbehälter (1) im wesentlichen glocken- oder haubenförmig und tragbar ist, und/oder
b) **dass** der Schutzbehälter begehbar ist.

10. Vorrichtung nach Anspruch 9, **gekennzeichnet durch** eine Atemluftversorgung für eine in dem Schutzbehälter befindliche Bedienungsperson.

11. Vorrichtung nach einem der vorhergehenden Ansprüche, **dadurch gekennzeichnet, dass** das Schutzgas im wesentlichen keimfrei ist.

12. Verfahren zur Handhabung einer Probe, insbesondere zur Bearbeitung, Untersuchung oder Ein- oder Auslagerung einer Kryoprobe, wobei die Probe während der Handhabung mit einem Umgebungsgas umgeben ist, das gekühlt, getrocknet und/oder mindestens teilweise durch ein Schutzgas ausgetauscht wird, um während der Handhabung der Probe eine Beeinträchtigung der Probe durch das Umgebungsgas zu vermeiden, mit den folgenden Schritten:
- Einführen der Probe in einen Schutzbehälter (1, 1"),
- Kühlen, Trocknen und/oder mindestens teilweises Austauschen des in dem Schutzbehälter (1, 1") befindlichen Umgebungsgases, um eine Beeinträchtigung der Probe durch das Umgebungsgas zu vermeiden,
- Verwenden einer Schutzgasquelle (9, 10, 10"), um den Schutzbehälter (1, 1") mindestens teilweise mit einem Schutzgas zu füllen, das eine Beeinträchtigung der Probe während ihrer Handhabung verhindert,
- wobei verflüssigtes Schutzgas in den Schutzbehälter (1, 1") aus einem mindestens teilweise offenen Schutzgasvorratsgefäß (9) der Schutzgasquelle (9, 10, 10") ausgast,
**dadurch gekennzeichnet, dass**
- das Schutzgas vor der Befüllung des Schutzbehälters (1, 1") gefiltert wird, um Bakterien, Viren oder andere Partikel zurückzuhalten.

13. Verfahren nach Anspruch 12, **dadurch gekennzeichnet, dass** die Probe zunächst in einem Probenbehälter angeordnet ist und erst in dem Schutzbehälter aus dem Probenbehälter entnommen wird.

14. Verfahren nach Anspruch 13, **dadurch gekennzeichnet, dass** der Schutzbehälter (1, 1") vor der Entnahme der Probe aus dem Probenbehälter mindestens teilweise mit dem Schutzgas gefüllt wird.

15. Verfahren nach einem der Ansprüche 12 bis 14, **dadurch gekennzeichnet,**
a) **dass** verflüssigtes Schutzgas erwärmt wird, um die Ausgasung des Schutzgases zu fördern, und/oder
b) **dass** der Schutzbehälter (1, 1") an seiner Unterseite eine Öffnung aufweist und auf den Probenbehälter mit der darin befindlichen Probe aufgesetzt wird, bevor die Probe aus dem Probenbehälter entnommen wird, und/oder
c) **dass** die Behälterwandung des Schutzbehälters (1, 1") beheizt wird, um eine Kondensation an der Behälterwandung zu verhindern, und/oder
d) **dass** die Probe in dem Schutzbehälter (1, 1") zur Sterilisierung mit UV-Licht bestrahlt wird, und/oder
e) **dass** das Schutzgas im wesentlichen keimfrei ist.

## Claims

1. A device for handling a sample, in particular, for treating, examining or inserting or extracting a cryosample, the sample being surrounded during the handling by an ambient gas, with
- a climate control equipment (9-11, 10", 11'') that cools, dries and/or at least partially replaces the ambient gas with a protective gas in order to avoid a deterioration of the sample by the ambient gas,
- a protective container (1, 1'') for receiving the sample during the handling, the climate control equipment (9-11, 10'', 11'') being connected to the protective container (1, 1'') in order to dry and cool the ambient gas present in the protective container (1, 1'') and/or replace it with the protective gas
- a protective gas source (9, 10, 10'') that is part of the climate control equipment (9-11, 10'', 11'') in order to fill the protective container (1, 1'') at least partially with a protective gas, the protective gas preventing a deterioration of the sample during its handling,
- wherein the protective gas source (9, 10, 10'') has an at least partially open protective-gas storage container (9) in which liquefied protective gas is present that outgases into the protective container (1, 1''),
**characterized in that**
- the protective-gas storage container (9) has a filter element in order to retain bacteria, viruses or other particles present in the liquefied protective gas during outgassing.

2. The device according to Claim 1, **characterized in that** a heating element (11, 11') is provided for heating the liquefied protective gas present in the protective-gas storage container (9) and for furthering the outgassing of the protective gas.

3. The device according to any one of the preceding Claims, **characterized in that** the protective container (1) is mobile and has an opening on its bottom in order to introduce the sample into or remove it from the protective container (1) or to place the protective container (1) on the sample.

4. The device according to any one of the preceding Claims, **characterized in that**
a) the protective container (1, 1'') has an at least partially transparent container wall in order to make a visual monitoring possible during the handling of the sample, and/or
b) an outlet opening is arranged on the top of the protective container (1, 1'') for discharging the excess ambient gas.

5. The device according to Claim 4, **characterized in that** a discharge tube (12, 12'') is connected to the outlet opening on the outside of the protective container (1, 1''), which tube has a downwardly directed mouth located outside of the protective container (1, 1'').

6. The device according to any one of the preceding Claims, **characterized in that**
a) the protective container (1, 1'') has at least one gas-tight or gas-exchange-reduced intervention zone (6, 6'') in order to be able to treat the sample in the protective container (1, 1''), and/or
b) a gas-tight or gas-exchange reduced lock (7, 7'') is provided in order to be able to introduce the sample into the protective container (1, 1'') and remove it out of the protective container (1, 1'').

7. The device according to Claim 6, **characterized in that**
a) the lock consists of an opening in the protective container (1'') and of a flexible curtain (14'', 15'') covering the opening, and/or
b) a lock (14''', 15'') is arranged on each of the opposite sides of the protective container (1'') in order to make an automated operation possible.

8. The device according to any one of the preceding Claims, **characterized in that**
a) the protective container (1, 1'') has a thermally insulating container wall in order to prevent condensations caused by cold on its outside, and/or
b) the protective container (1, 1'') has a heatable container wall in order to prevent condensations caused by cold on its outside, and/or
c) at least one UV lamp for sterilization is mounted in the protective container (1, 1'').

9. The device according to any one of the preceding Claims, **characterized in that**
a) the protective container (1) is substantially bell-shaped or hood-shaped and portable, and/or
b) the protective container is man-accessible.

10. The device according to Claim 9, **characterized by** a breathing air supply for an operator in the protective container.

11. The device according to any one of the preceding Claims, **characterized in that** the protective gas is substantially sterile.

12. A method for handling a sample, in particular, for treating, examining or inserting or extracting a cryosample, the sample being surrounded during the handling by an ambient gas that is cooled, dried and/or at least partially replaced with a protective gas in order to avoid a deterioration of the sample by the ambient gas during the handling of the sample, with the following steps:
- Introduction of the sample into a protective container (1, 1''),
- Cooling, drying and/or at least partially replacing the ambient gas present in the protective container (1, 1'') in order to avoid a deterioration of the sample by the ambient gas,
- The use of a protective gas source (9, 10, 10'') in order to fill the protective container (1, 1'') at least partially with a protective gas that prevents a deterioration of the sample during its handling,
- wherein liquefied protective gas is outgassed into the protective container (1, 1'') from an at least partially open protective-gas storage container (9) of the protective gas source (9, 10, 10''),
**characterized in that**
- the protective gas is filtered prior to the filling of the protective container (1, 1'') in order to retain bacteria, viruses or other particles.

13. The method according to Claim 12, **characterized in that** the sample is first arranged in a sample container and is not removed from the sample container until in the protective container.

14. The method according to Claim 13, **characterized in that** the protective container (1, 1'') is filled at least partially with the protective gas prior to the removal of the sample from the sample container.

15. The method according to any one of Claims 12 to 14, **characterized in that**
a) liquefied protective gas is heated in order to further the outgassing of the protective gas, and/or
b) the protective container (1, 1'') has an opening on its bottom and is placed on the sample container with the sample in it before the sample is removed from the sample container, and/or
c) the container wall of the protective container (1, 1'') is heated in order to prevent a condensation on the container wall, and/or
d) the sample in the protective container (1, 1'') is irradiated with UV light for sterilization, and/or
e) the protective gas is substantially sterile.

## Revendications

1. Dispositif de manipulation d'un échantillon, notamment de traitement, d'examen et de mise en stock ou d'extraction de stock d'un échantillon cryogénique, l'échantillon étant entouré par un gaz de confinement lors de la manipulation, pourvu
- d'un système de climatisation (9-11, 10'', 11''), lequel réfrigère, sèche le gaz de confinement et/ou le remplace au moins partiellement par un gaz de protection, de manière à éviter toute influence du gaz de confinement sur l'échantillon lors de la manipulation,
- d'un caisson de protection (1, 1'') destiné à loger l'échantillon lors de la manipulation, le système de climatisation (9-11, 10'', 11'') étant relié au caisson de protection (1, 1''), de manière à sécher, à refroidir le gaz de confinement situé dans le caisson de protection (1, 1'') et/ou à le remplacer par le gaz de protection,
- d'une source de gaz de protection (9, 10, 10''), laquelle fait partie du système de climatisation (9-11, 10'', 11''), de manière à remplir le caisson de protection (1, 1'') au moins partiellement d'un gaz de protection, le gaz de protection empêchant toute influence sur l'échantillon lors de la manipulation de ce dernier,
- la source de gaz de protection (9, 10, 10'') comprenant un réservoir de stockage de gaz de protection (9) au moins partiellement ouvert, dans lequel se situe le gaz de protection liquéfié s'évacuant dans le caisson de protection (1, 1''),
**caractérisé en ce que**
le réservoir de stockage de gaz de protection (9) comprend un élément filtre de manière à retenir les bactéries, les virus ou d'autres particules situés dans le gaz de protection liquéfié lors de l'évacuation du gaz.

2. Dispositif selon la revendication 1, **caractérisé en ce qu'**un élément chauffant (11, 11'') est destiné à chauffer le gaz de protection liquéfié situé dans le réservoir de stockage de gaz de protection (9) et à favoriser l'évacuation du gaz de protection.

3. Dispositif selon l'une quelconque des revendications précédentes, **caractérisé en ce que** le caisson de protection (1) est mobile et présente sur sa face inférieure une ouverture, de manière à introduire l'échantillon dans le caisson de protection (1) ou à l'en prélever, ou de manière à poser le caisson de protection (1) sur l'échantillon.

4. Dispositif selon l'une quelconque des revendications précédentes, **caractérisé en ce que**
a) le caisson de protection (1, 1'') comprend une paroi de caisson au moins partiellement transparente, de manière à permettre un contrôle visuel lors la manipulation de l'échantillon, et/ou
b) une ouverture de sortie permettant d'évacuer l'excédent de gaz de confinement est ménagée sur la face supérieure du caisson de protection (1, 1'').

5. Dispositif selon la revendication 4, **caractérisé en ce qu'**un tube d'évacuation (12, 12'') présentant une embouchure située à l'extérieur du caisson de protection (1, 1'') et orientée vers le bas est raccordé par l'extérieur à l'ouverture de sortie du caisson de protection (1, 1'').

6. Dispositif selon l'une quelconque des revendications précédentes,
**caractérisé en ce que**
a) le caisson de production (1, 1'') comprend au moins une prise (6, 6'') étanche au gaz ou à échange gazeux réduit, de manière à pouvoir traiter l'échantillon situé dans le caisson de protection (1, 1''), et/ou
b) un sas (7, 7'') étanche au gaz ou à échange gazeux réduit est destiné à introduire l'échantillon dans le caisson de protection (1, 1'') et à prélever l'échantillon du caisson de protection (1, 1'').

7. Dispositif selon la revendication 6,
**caractérisé en ce que**
a) le sas est constitué d'une ouverture dans le caisson de protection (1'') et d'un rideau flexible (14'', 15'') recouvrant l'ouverture, et/ou
b) respectivement un sas (14'', 15'') est disposé sur la face opposée du caisson de protection (1''), de manière à permettre un fonctionnement automatisé.

8. Dispositif selon l'une quelconque des revendications précédentes,
**caractérisé en ce que**
a) le caisson de protection (1, 1'') présente une paroi de caisson thermo-isolante, de manière à empêcher une condensation due au froid sur la face supérieure de celle-ci, et/ou
b) le caisson de protection (1, 1'') présente une paroi de caisson chauffante, de manière à empêcher une condensation due au froid sur la face supérieure de celle-ci, et/ou
c) au moins une lampe à rayons ultraviolets permettant d'effectuer une stérilisation est fixée dans le caisson de protection (1, 1'').

9. Dispositif selon l'une quelconque des revendications précédentes, **caractérisé en ce que**
a) le caisson de protection (1) est sensiblement en forme de cloche ou de calotte et portatif, et/ou
b) le caisson de protection est praticable.

10. Dispositif selon la revendication 9, **caractérisé par** une alimentation en air destiné à la respiration artificielle pour un opérateur situé dans le caisson de protection.

11. Dispositif selon l'une quelconque des revendications précédentes, **caractérisé en ce que** le gaz de protection est sensiblement exempt de germes.

12. Procédé de manipulation d'un échantillon, notamment de traitement, d'examen et de mise en stock ou d'extraction de stock d'un échantillon cryogénique, l'échantillon étant entouré par un gaz de confinement lors de la manipulation, lequel est réfrigéré, séché et/ou remplacé au moins partiellement par un gaz de protection, de manière à éviter toute influence du gaz de confinement sur l'échantillon lors de la manipulation, comprenant les étapes suivantes consistant à :
- introduire l'échantillon dans un caisson de protection (1, 1''),
- refroidir, sécher et/ou remplacer au moins partiellement le gaz de confinement situé dans le caisson de protection (1, 1''), de manière à empêcher toute influence du gaz de confinement sur l'échantillon,
- utiliser une source de gaz de protection (9, 10, 10''), de manière à remplir le caisson de protection (1, 1'') au moins partiellement d'un gaz de protection, lequel empêche toute influence sur l'échantillon lors de la manipulation de celui-ci,
- le gaz de protection liquéfié dans le caisson de protection (1, 1'') s'évacuant d'un réservoir de stockage de gaz de protection (9) au moins partiellement ouvert de la source de gaz de protection (9, 10, 10''),
**caractérisé en ce que**
- le gaz de protection est filtré avant le remplissage du caisson de protection (1, 1''), de manière à retenir les bactéries, les virus ou d'autres particules.

13. Procédé selon la revendication 12, **caractérisé en ce que** l'échantillon est tout d'abord disposé dans un contenant d'échantillons et n'est prélevé du contenant d'échantillon que lorsqu'il se trouve dans le caisson de protection.

14. Procédé selon la revendication 13, **caractérisé en ce que** le caisson de protection (1, 1''), avant le prélèvement de l'échantillon du contenant d'échantillons, est au moins partiellement rempli du gaz de protection.

15. Procédé selon l'une quelconque des revendications 12 à 14, **caractérisé en ce que**
a) le gaz de protection liquéfié est chauffé, de manière à favoriser l'évacuation du gaz de protection, et/ou
b) le caisson de protection (1, 1'') présente sur sa face inférieure une ouverture et est posé sur le contenant d'échantillons, dans lequel se situe l'échantillon, avant que l'échantillon ne soit prélevé du contenant d'échantillons, et/ou
c) la paroi de caisson du caisson de protection (1,1'') est chauffée de manière à empêcher une condensation sur la paroi de caisson, et/ou
d) l'échantillon dans le caisson de protection (1,1'') est exposé à une lumière ultraviolette de manière à être stérilisé, et/ou
e) le gaz de protection est sensiblement stérile.
